(19) Europäisches Patentamt / European Patent Office / Office européen des brevets

(11) **EP 2 097 940 B1**

(12) **FASCICULE DE BREVET EUROPEEN**

(45) Date de publication et mention de la délivrance du brevet:
**22.09.2010 Bulletin 2010/38**

(21) Numéro de dépôt: **07872402.8**

(22) Date de dépôt: **19.12.2007**

(51) Int Cl.:
*H01M 4/90* $^{(2006.01)}$     *H01M 4/88* $^{(2006.01)}$
*H01M 4/86* $^{(2006.01)}$     *H01M 8/12* $^{(2006.01)}$
*C01G 53/00* $^{(2006.01)}$     *C01F 17/00* $^{(2006.01)}$

(86) Numéro de dépôt international:
**PCT/FR2007/002115**

(87) Numéro de publication internationale:
**WO 2008/093020 (07.08.2008 Gazette 2008/32)**

(54) **ELECTRODE A GAZ, SON PROCEDE DE FABRICATION ET SES APPLICATIONS**

GASELEKTRODE, VERFAHREN ZU DEREN HERSTELLUNG UND IHRE ANWENDUNG

GAS ELECTRODE, METHOD FOR MAKING THE SAME AND USES THEREOF

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **22.12.2006 FR 0611280**

(43) Date de publication de la demande:
**09.09.2009 Bulletin 2009/37**

(73) Titulaires:
• **Université Paul Sabatier (Toulouse III)**
  **31062 Toulouse Cedex (FR)**
• **Centre National de la Recherche Scientifique (CNRS)**
  **75016 Paris (FR)**

(72) Inventeurs:
• **FONTAINE, Marie-Laure**
  **0314 Oslo (NO)**
• **MAUVY, Fabrice**
  **F-33610 Canejan (FR)**
• **LENORMAND, Pascal**
  **f-31400 Toulouse (FR)**
• **BASSAT, Jean-Marc**
  **F-33610 Cestas (FR)**
• **ANSART, Florence**
  **F-31670 Labège (FR)**
• **GRENIER, Jean-Claude**
  **F-33140 Cadaujac (FR)**

(74) Mandataire: **Cabinet BARRE LAFORGUE & associés**
**95, rue des Amidonniers**
**31000 Toulouse (FR)**

(56) Documents cités:
EP-A2- 0 510 820     WO-A-99/33134
WO-A-2005/099003     DE-C1- 4 237 519
JP-A- 2005 183 279     JP-A- 2006 012 764

• **F. MAUVY ET AL.: "Oxygen reduction on porous Ln2NiO4+delta electrodes" JOURNAL OF THE EUROPEAN CERAMIC SOCIETY, vol. 25, no. 12, 2005, pages 2669-2672, XP004934339 ISSN: 0955-2219 cité dans la demande**

## Description

L'invention concerne une électrode à gaz comprenant une pluralité de couches empilées les unes sur les autres à partir d'un substrat solide tel qu'un électrolyte solide, les différentes couches étant adaptées pour permettre le passage d'espèces réactives à travers l'épaisseur de cette électrode, et comprenant une première couche en contact avec ledit substrat solide et une dernière couche présentant une surface libre externe destinée à être placée en contact avec un gaz, notamment avec une source d'oxygène gazeux telle que l'air ambiant. Une telle électrode à gaz -notamment à air- est en particulier applicable pour former une électrode -notamment la cathode- d'une cellule électrolytique, notamment une cellule électrochimique à électrolyte solide (dite SOEC), et en particulier une cellule de pile à combustible à oxyde solide (dite SOFC). Elle est également applicable dans la réalisation d'une membrane électrochimique.

Les piles à combustible sont des dispositifs de production d'énergie extrêmement prometteurs, mais dont l'optimisation technologique reste à réaliser pour permettre leur diffusion à une grande échelle, notamment dans des applications pour le grand public, en particulier dans le domaine des transports ou des locaux d'habitation ou industriels. L'un des problèmes qui se pose avec ces dispositifs est en particulier celui de la réalisation d'électrodes performantes à des températures raisonnables (typiquement inférieures à 800° C), stables dans le temps et présentant une résistance de polarisation aussi faible que possible, en tout cas suffisamment faible pour permettre l'obtention d'un rendement électrique acceptable. De surcroît, cet objectif doit être atteint avec l'utilisation de techniques de fabrication compatibles, en terme de rentabilité et de faisabilité, avec une exploitation à l'échelle industrielle.

C'est pourquoi ces piles à combustible, et en particulier les électrodes à gaz qui les constituent, ont fait récemment l'objet de nombreuses recherches.

Par exemple, il a déjà été proposé des solutions visant à améliorer l'interface entre l'électrode à air et l'électrolyte et/ou pour prendre en compte les différences de composition et de coefficient de dilatation thermique entre les matériaux constitutifs de l'électrolyte et de l'électrode.

Les matériaux les plus communément envisagés pour réaliser une telle électrode à air sont des céramiques poreuses à base d'oxyde de structure pérovskite, par exemple les manganites de lanthane dopés au strontium LSM (WO 9933134, EP 0510820, FR 2697947, JP 2006012764, JP 2005183279...). Avec ces matériaux, on obtient au mieux une valeur de résistance de polarisation de l'ordre de 100 $\Omega.cm^2$ à 800 °C. L'électrolyte solide est une céramique dense, généralement à base d'oxyde de structure fluorine, et l'anode est un composite céramique-métal poreux, en général constitué d'une céramique du même matériau que celui formant l'électrolyte solide, dans laquelle un métal a été dispersé, par exemple du nickel.

Par ailleurs, WO 2005/099003 décrit un nouveau matériau oxyde pouvant être avantageusement utilisé pour réaliser une électrode à gaz, notamment une électrode à air formant la cathode d'une pile à combustible.

Néanmoins, malgré toutes ces recherches, aucune solution n'a encore été proposée permettant d'obtenir des valeurs de résistance de polarisation et de durée de vie acceptables, notamment avec un domaine de température de fonctionnement compris entre 400° C et 800° C.

L'invention vise donc à résoudre ce problème en proposant une électrode à gaz présentant une résistance de polarisation et une durée de vie améliorées, notamment pour une gamme de températures de fonctionnement comprises entre 400° C et 800° C.

En particulier, l'invention vise à proposer une électrode à gaz présentant, pour une température de fonctionnement inférieure à 800 °C - notamment comprise entre 650 °C et 800 °C-, une résistance de polarisation inférieure à 5 $\Omega.cm^2$.

Plus particulièrement, l'invention vise à proposer une telle électrode à gaz dont les coûts et les techniques de fabrication sont compatibles avec une exploitation à l'échelle industrielle.

L'invention vise également à proposer un procédé de fabrication d'une telle électrode, ainsi qu'une cellule électrochimique incorporant une telle électrode, et présentant les mêmes avantages.

A cet effet, l'invention concerne une électrode à gaz comprenant une pluralité de couches empilées les unes sur les autres à partir d'un substrat solide tel qu'un électrolyte solide, les différentes couches étant adaptées pour permettre le passage d'espèces réactives à travers l'épaisseur de cette électrode, et comprenant une première couche en contact avec ledit substrat solide et une dernière couche présentant une surface libre externe destinée à être placée en contact avec un gaz, chacune desdites couches étant constituée d'au moins un oxyde mixte, caractérisée en ce que :

- chacune desdites couches est constituée d'au moins un oxyde mixte choisi dans le groupe formé des pérovskites, et des phases de Ruddlesden-Popper répondant à la formule générale (I) suivante :

$$L_{n+1-x}Ni_{n-y}M_yO_{3n+1\pm\delta}$$

où L est un élément choisi dans le groupe des terres rares, Ni représente le nickel, M est un métal de transition, *n* est un nombre entier non nul, *x, y* et δ sont des nombres réels satisfaisant les relations suivantes :

$$0 \le x < n+1$$

$$0 \le y < n$$

$$0 \le \delta \le 0{,}25,$$

- ladite première couche est constituée d'au moins un oxyde mixte choisi dans le groupe des phases de Ruddlesden-Popper répondant à la formule (I),
- la microstructure de ladite première couche est différente de la microstructure de ladite dernière couche,
- la porosité des différentes couches augmente depuis ladite première couche dont la porosité est la plus faible jusqu'à ladite dernière couche dont la porosité est la plus importante,
- les différentes couches empilées les unes sur les autres forment un réseau de matière solide interconnectée entre la surface libre externe de la dernière couche et le substrat solide, en présentant une épaisseur totale supérieure à 1 μm.

Une électrode selon l'invention se distingue ainsi de l'état de la technique en particulier par le choix des matériaux constitutifs des couches qui la constituent. Les inventeurs ont en effet constaté que cette famille spécifique de matériaux permet en pratique d'obtenir des résultats étonnamment supérieurs aux autres matériaux plus ou moins similaires envisagés jusqu'à présent dans le cadre de la réalisation d'une électrode à gaz, et ce sans qu'aucune explication scientifique précise ne puisse être donnée à ces résultats surprenants.

En outre, une électrode selon l'invention se distingue également par le fait que les différentes couches qui la constituent présentent une microstructure hétérogène, c'est-à-dire qui varie d'une couche à l'autre. En particulier, avantageusement et selon l'invention, la microstructure de la première couche est différente de celle de la couche superposée au contact de cette première couche. Cette différence de microstructures provient notamment du fait que les couches sont réalisées par des procédés de dépôts distincts, avec des matériaux qui, bien qu'appartenant à la même famille (formule (I) mentionnée ci-dessus), sont différents (notamment du fait de proportions différentes pour les différents éléments constitutifs du matériau), et avec des paramètres également distincts en termes d'épaisseur, de tailles des grains de matériau déposé, de tailles des pores... En particulier, dans une électrode selon l'invention, la première couche présente avantageusement des caractéristiques macroscopiques qui se situent à l'échelle nanométrique (c'est-à-dire avec des dimensions comprises entre 1 nm et 1000 nm), tandis que la dernière couche, et plus particulièrement toutes les couches superposées à la première couche, présentent des caractéristiques macroscopiques qui se situent à l'échelle micrométrique (c'est-à-dire avec des dimensions comprises entre 1 μm et 1000 μm). En particulier, dans une électrode selon l'invention, la microstructure des différentes couches est telle que la porosité augmente depuis la première couche jusqu'à la dernière couche. Malgré cela, les différentes couches empilées forment un réseau de matière solide interconnectée entre la surface libre externe de la dernière couche et le substrat solide, de sorte que les espèces ioniques et les électrons peuvent circuler au contact de ce réseau en traversant l'épaisseur de l'électrode.

Cette combinaison de caractéristiques particulières permet d'obtenir des résultats inédits, notamment en termes de résistance de polarisation à basse température, c'est-à-dire à une température comprise entre 400°C et 800°C.

Une électrode selon l'invention est également avantageusement caractérisée par tout ou partie des caractéristiques suivantes :

- ladite dernière couche est constituée d'au moins un oxyde mixte choisi dans le groupe formé des pérovskites et des phases de Ruddlesden-Popper répondant à la formule (I), et toutes les autres couches sont constituées d'au moins un oxyde mixte choisi dans le groupe formé des phases de Ruddlesden-Popper répondant à la formule générale (I) ; autrement dit, seule la dernière couche peut être éventuellement formée d'une structure pérovskite ou incorporer au moins un oxyde mixte présentant la structure d'une pérovskite ; en variante, toutes les couches sont constituées d'au moins un oxyde mixte choisi dans le groupe formé des phases de Ruddlesden-Popper répondant à la formule générale (I),
- les éléments L et M sont les mêmes pour toutes lesdites couches de l'électrode,

- la différence de microstructures provient de proportions différentes pour les différents éléments constitutifs du matériau, c'est-à-dire que les valeurs des paramètres $n$, $x$, $y$ et $\delta$ de la formule (I) varient d'une couche à l'autre (que les éléments L et M soient le même ou non) ; de préférence, les éléments L et M sont les mêmes pour toutes lesdites couches de l'électrode et les valeurs des paramètres $n$, $x$, $y$ et $\delta$ de la formule (**I**) varient d'une couche à l'autre ;
- L est un élément choisi dans le groupe formé de La, Pr, Nd, Sm, Eu, Er, et Gd, et M est un métal de transition choisi dans le groupe formé de Fe, Co, et Mn,
- ladite première couche est constituée d'au moins un oxyde mixte choisi dans le groupe des phases de Ruddlesden-Popper répondant à la formule (I) avec n-x ≠ 1,
- pour ladite première couche, on a (n+1-x) /(n-y) < 2,
- ladite première couche est constituée d'un oxyde mixte de formule $L_{2-x}NiO_{4+\delta}$, L étant choisi dans le groupe formé de La, Pr, Nd,
- ladite dernière couche est constituée d'un oxyde mixte choisi dans le groupe formé de $LNiO_3$, $L_{2-x}NiO_{4+\delta}$, $L_3Ni_2O_{7-\delta}$, et $L_4Ni_3O_{10-\delta}$ L étant choisi dans le groupe formé de La, Pr, Nd,
- ladite première couche est constituée de particules solides élémentaires reliées en contact les unes avec les autres, la taille moyenne de ces particules élémentaires étant inférieure à 300 nm,
- l'épaisseur de ladite première couche est inférieure à 200 nm -notamment de l'ordre de 50 nm-,
- ladite dernière couche est constituée de particules solides élémentaires formant entre elles des pores ouverts et constituant un réseau interconnecté de matière solide à travers toute son épaisseur,
- ladite dernière couche est constituée de particules solides élémentaires reliées en contact les unes avec les autres, la taille moyenne de ces particules élémentaires étant comprise entre 100 nm et 5 $\mu$m,
- elle comprend entre deux et cinq couches empilées sur le substrat solide, les différentes couches empilées présentant une épaisseur totale comprise entre 1 $\mu$m et 15 $\mu$m,
- ladite première couche présente une porosité inférieure à 10 % en volume,
- ladite dernière couche présente une porosité supérieure à 10 % et inférieure à 50 % en volume,
- elle présente une pluralité de couches superposées à ladite première couche en contact avec le substrat solide, et dont la porosité est croissante depuis ladite première couche jusqu'à ladite dernière couche,
- chacune desdites couches résulte d'au moins un dépôt choisi parmi un dépôt de barbotine, un dépôt de sol chargé, et un dépôt sol-gel,
- au moins une couche intermédiaire entre ladite première couche et ladite dernière couche résulte d'au moins un dépôt choisi parmi un dépôt de barbotine et un dépôt de sol chargé,
- ladite première couche résulte d'au moins un dépôt sol-gel,
- ladite dernière couche résulte d'au moins un dépôt choisi parmi un dépôt de barbotine et un dépôt de sol chargé,
- parmi les différentes couches, ladite première couche présente la plus grande conductivité ionique,
- ladite première couche est formée d'un matériau dont la conductivité ionique est supérieure ou égale à $10^{-2}$ S.cm$^{-1}$,
- ladite dernière couche est formée d'un matériau dont la conductivité ionique est supérieure à $10^{-4}$ S.cm$^{-1}$, et dont la conductivité électronique est supérieure à 50 S.cm$^{-1}$.

L'invention s'étend à un procédé de fabrication d'une électrode selon l'invention. L'invention concerne ainsi un procédé de fabrication d'une électrode à gaz dans lequel on empile une pluralité de couches les unes sur les autres à partir d'un substrat solide tel qu'un électrolyte solide, les différentes couches étant réalisées pour permettre le passage d'espèces réactives à travers l'épaisseur de cette électrode, et comprenant une première couche en contact avec ledit substrat solide et une dernière couche présentant une surface libre externe destinée à être placée en contact avec un gaz, chacune desdites couches étant constituée d'au moins un oxyde mixte, caractérisé en ce que :

- on réalise chacune desdites couches de façon à ce qu'elle soit constituée d'au moins un oxyde mixte choisi dans le groupe formé des pérovskites, et des phases de Ruddlesden-Popper répondant à la formule générale (I) suivante :

$$L_{n+1-x}Ni_{n-y}M_yO_{3n+1\pm\delta}$$

où L est un élément choisi dans le groupe des terres rares, Ni représente le nickel, M est un métal de transition, n est un nombre entier non nul, x, $y$ et $\delta$ sont des nombres réels satisfaisant les relations suivantes :

$$0 \le x < n+1$$

$$0 \leq y < n$$

$$0 \leq \delta \leq 0,25,$$

- ladite première couche est réalisée de façon à être constituée d'au moins un oxyde mixte choisi dans le groupe des phases de Ruddlesden-Popper répondant à la formule (I),
- on réalise ladite première couche selon un procédé de dépôt différent du procédé de dépôt avec lequel on réalise ladite dernière couche, de sorte que :

  - la microstructure de ladite première couche est différente de la microstructure de ladite dernière couche,
  - la porosité des différentes couches augmente depuis ladite première couche dont la porosité est la plus faible jusqu'à ladite dernière couche dont la porosité est la plus importante,

- on réalise les différentes couches empilées de telle façon qu'elles forment un réseau de matière solide interconnectée entre la surface libre externe de la dernière couche et le substrat solide, en présentant une épaisseur totale supérieure à 1 μm.

Avantageusement dans un procédé selon l'invention, on réalise chacune des couches de l'électrode, notamment ladite première couche et/ou ladite dernière couche, de façon à ce qu'elle soit conforme à tout ou partie des caractéristiques mentionnées ci-dessus.

En particulier, avantageusement et selon l'invention, on réalise ladite première couche avec un procédé de dépôt différent du procédé de dépôt de la couche superposée au contact de cette première couche. On dépose ladite première couche sur le substrat solide par au moins un dépôt sol-gel dans lequel on mélange dans un solvant des espèces précurseurs destinées à former au moins un oxyde mixte, puis on mélange la suspension à une matrice polymère organique, puis on applique ce mélange sur le substrat solide, puis on soumet l'ensemble à un traitement thermique adapté pour entraîner la cristallisation de chaque oxyde mixte et la décomposition de la matrice polymère organique.

Également, avantageusement et selon l'invention, on applique ladite dernière couche en réalisant au moins un dépôt de barbotine dans lequel on réalise une barbotine contenant des particules solides d'au moins un oxyde mixte dispersées dans un milieu liquide, puis on applique cette barbotine sous forme d'au moins une couche, puis on soumet l'ensemble à un traitement adapté pour entraîner l'évacuation du milieu liquide. Ainsi, dans cette variante de l'invention, on applique ladite dernière couche par un dépôt de barbotine.

En variante, on peut aussi appliquer ladite dernière couche par un dépôt de sol chargé. Pour ce faire, avantageusement et selon l'invention on applique ladite dernière couche en réalisant au moins un dépôt de sol chargé dans lequel on réalise une suspension contenant des particules solides dispersées dans un milieu liquide contenant des précurseurs d'espèces destinées à former au moins un oxyde mixte, puis on applique cette suspension sous forme d'au moins une couche, puis on soumet l'ensemble à un traitement adapté pour entraîner le dépôt et la cristallisation des oxydes mixtes et l'évacuation de la phase liquide.

Avantageusement et selon l'invention, on applique chaque couche intermédiaire entre ladite première couche et ladite dernière couche en réalisant au moins un dépôt de barbotine et/ou au moins un dépôt de sol chargé comme indiqué ci-dessus. De préférence, on applique chaque couche superposée à ladite première couche jusqu'à la dernière couche en utilisant le même procédé de dépôt (barbotine ou sol chargé).

Par ailleurs, avantageusement et selon l'invention, le substrat solide est un électrolyte solide étanche aux gaz (non poreux), choisi dans le groupe constitué des céramiques conductrices des anions $O^{2-}$ et des céramiques conductrices des protons.

Les oxydes mixtes répondant à la formule (I) sont des phases de la série de Ruddlesden-Popper ($L_{n+1}Ni_nO_{3n+1}$). Les phases de Ruddlesden-Popper sont bien connues (cf. par exemple la publication M. Greenblatt «Ruddlesden-Popper nickelates Lnn+1NinO3n+1 : structure and properties», Current Opinion in Solid State & Matérials Science, 2 (1997) p. 174-183) et ont fait l'objet d'études concernant notamment leurs propriétés magnétiques et électriques. Il a été également envisagé d'utiliser certains de ces oxydes mixtes à titre d'électrode poreuse (cf. par exemple la publication F. Mauvy et al «Oxygen reduction on porous Ln2NiO4+δ electrodes », Journal of the European Ceramic Society 25 (2005) 2669-2672). Néanmoins, les meilleures valeurs de résistance de polarisation obtenues jusqu'à maintenant avec ces matériaux pour une température de fonctionnement de l'ordre de 800 °C, sont de l'ordre de 10 Ω.cm².

Les inventeurs ont maintenant constaté avec surprise que l'utilisation de tels oxydes mixtes choisis dans le groupe formé des pérovskites, et des phases de Ruddlesden-Popper conformes à la formule (I), permet en pratique de réaliser une électrode formée de différentes couches empilées comme indiqué ci-dessus, et ce par des procédés industriels simples et économiques, du type dépôt sol-gel et/ou dépôt de barbotine et/ou dépôt de sol chargé, tout en contrôlant précisément :

- la porosité et le gradient de porosité dans l'épaisseur de l'électrode,
- les propriétés de conduction ionique et électronique au sein de l'électrode, et donc ses performances électriques,
- les coefficients de dilatation thermique des différentes couches superposées pour les rendre compatibles les uns avec les autres,

et en évitant la formation de phases nuisibles, notamment par diffusion cationique, au cours de l'utilisation de l'électrode, à l'interface entre l'électrode et l'électrolyte.

Une électrode conforme à l'invention présente des performances inattendues en terme de stabilité dans le temps et de résistance de polarisation. En particulier, une électrode selon l'invention peut présenter, pour une température de fonctionnement inférieure à 800 °C -notamment comprise entre 650 °C et 800 °C-, une résistance de polarisation inférieure à 5 $\Omega$.cm$^2$ -notamment de l'ordre de 1 $\Omega$.cm$^2$ à 800°C-.

L'invention est en particulier avantageusement applicable pour la réalisation d'une électrode à gaz d'une cellule électrochimique. En conséquence, l'invention s'étend à une cellule électrochimique comprenant au moins une électrode à gaz selon l'invention. Plus particulièrement, l'invention s'étend à une cellule électrochimique de pile à combustible caractérisée en ce qu'elle comprend un électrolyte solide portant une cathode formée d'une électrode à air conforme à l'invention.

Dans une cellule électrochimique selon l'invention, l'électrode à gaz présente une forme globalement plane, ou une forme globalement cylindrique -notamment cylindrique de révolution-, ou toute autre forme.

D'autres caractéristiques, buts et avantages de l'invention apparaîtront à la lumière de la description suivante qui se réfère aux exemples donnés ci-après et aux figures annexées dans lesquelles :

- la figure 1 est un schéma illustrant en coupe une électrode à gaz conforme à un premier exemple de réalisation de l'invention,
- la figure 2 est un schéma illustrant en coupe une électrode à gaz conforme à un deuxième exemple de réalisation de l'invention,
- la figure 3 est un schéma illustrant en coupe une électrode à gaz conforme à un troisième exemple de réalisation de l'invention,
- la figure 4 est un diagramme illustrant des valeurs de résistance de polarisation spécifique obtenues avec différents échantillons d'électrodes à gaz conformes à l'invention,
- les figures 5a, 5b, 5c, 5d sont des photographies illustrant à différents grossissements la structure d'une électrode à gaz selon un exemple de réalisation de l'invention.

Une électrode à gaz selon l'invention est constituée d'une pluralité de couches 2, 3, 4 superposées les unes sur les autres à partir d'un substrat solide 1 formé d'une céramique dense.

La première couche 2 est constituée d'au moins un oxyde mixte choisi dans le groupe formé des phases de Ruddlesden-Popper répondant à la formule générale (I) suivante :

$$L_{n+1-x}Ni_{n-y}M_yO_{3n+1\pm\delta}$$

où L est un élément choisi dans le groupe des terres rares, Ni représente le nickel, M est un métal de transition, $n$ est un nombre entier non nul, $x$, $y$ et $\delta$ sont des nombres réels satisfaisant les relations suivantes :

$$0 \leq x < n+1$$

$$0 \leq y < n$$

$$0 \leq \delta \leq 0{,}25.$$

Chacune des autres couches 3, 4 est constituée d'au moins un oxyde mixte choisi dans le groupe formé des pérovskites et des phases de Ruddlesden-Popper répondant à la formule générale (I) ci-dessus mentionnée. De préférence, chacune desdites couches 2, 3 est constituée d'au moins un oxyde mixte choisi dans le groupe formé uniquement des phases de Ruddlesden-Popper répondant à la formule (I), à l'exception de la dernière couche 4 qui est constituée d'au moins un oxyde mixte choisi dans le groupe des pérovskites et des phases de Ruddlesden-Popper répondant à la formule (I), c'est-à-dire qui peut comprendre au moins un oxyde mixte choisi dans le groupe des pérovskites.

La structure cristallographique des phases de Ruddlesden-Popper répondant à la formule (I), qui peut aussi être représentée par $(LO) (L_{n-x}Ni_{n-y} M_y O_3)_n$, est formée de n couches pérovskites d'octaèdres oxygénés $Ni_{n-y}M_yO_6$. Les atomes d'oxygène forment un feuillet dont la structure est de type NaCl. Le nombre n représente le nombre de couches pérovskites liées entre elles par le sommet des octaèdres, et $\delta$ représente le nombre d'atomes d'oxygène interstitiels insérés dans la couche LO (cf. par exemple la publication M. Greenblatt «Ruddlesden-Popper nickelates Lnn+1NinO3n+1: structure and properties», Current opinion in Solid State & Matérials Science, 2 (1997) p. 174-183).

Dans une électrode à gaz selon l'invention, la première couche 2 déposée au contact du substrat solide 1 est formée d'un film mince dont la microstructure présente des caractéristiques dimensionnelles qui se situent à l'échelle nanométrique.

La dernière couche 4, et de préférence chacune des couches 3, 4 superposées à cette première couche 2, est formée d'une couche plus épaisse réalisée avec un matériau appartenant à la famille mentionnée ci-dessus, mais qui est différente, en ce qui concerne sa microstructure, de la première couche 2. La dernière couche 4, et de préférence chacune des couches 3, 4 superposées à cette première couche 2, est réalisée selon un procédé de dépôt différent, et de façon à présenter une microstructure dont les caractéristiques dimensionnelles se situent à l'échelle micrométrique.

De préférence, L est un élément choisi dans le groupe formé de La, Pr, Nd, Sm, Eu, Er, et Gd, et M est un métal de transition choisi dans le groupe formé de Fe, Co, et Mn.

Rien n'empêche cependant de faire varier la nature des éléments L et M d'une couche à l'autre au sein d'une même électrode conforme à l'invention. Néanmoins, avantageusement, dans une électrode selon l'invention, les éléments L et M sont les mêmes pour toutes lesdites couches de l'électrode. Il en résulte en particulier une meilleure affinité chimique, une meilleure compatibilité thermomécanique et moins de problèmes liés aux phénomènes de diffusion des éléments constitutifs de l'électrode les uns dans les autres.

Le substrat solide 1 est un électrolyte solide dense, c'est-à-dire non poreux et donc étanche aux gaz. Un tel électrolyte solide dense peut être choisi dans le groupe constitué des céramiques conductrices des anions $O^{2-}$ et des céramiques conductrices des protons. Plus particulièrement, le substrat solide 1 est choisi parmi :

- Les matériaux conducteurs protoniques, et en particulier ceux présentant l'une des structures suivantes :

  - Structure perovskite $AB_{1-x}M_xO_3$:

    o Exemples: $Ba(Zr,Yb)O_3$, $Sr(Ce,Y)O_3$

  - Structure brownmillerite : $A_2B_2O_5$:

    o Exemple: $Sr_2Gd_2O_5$

  - Structure pyrochlore: $A_2B_2O_7$

    o Exemple: $Er_2Ti_2O_7$

  - Structure monazite: $LBO_4$

    o Exemple: $La_{0.995}Sr_{0.005}NbO_4$

  - Structure sesquioxide:

    o Exemple: $Er_2O_3$ dopé

  - Phosphate: $LPO_4$

    o Exemple: $LaPO_4$

- les matériaux conducteurs anioniques de l'oxygène, et en particulier ceux présentant l'une des structures suivantes :

- Structure perovskite $AB_{1-x}M_xO_3$ :

  o Exemple: $La_{0.9}Ba_{0.1}Ga_{0.8}Mg_{0.2}O_{2.85}$

- Structure brownmillerite $A_2B_2O_5$ :

  o Exemple: $Ba_2In_2O_5$

- Structure fluorite $AO_2$ :

  o Exemple:zircone yttriée : $(Zr,Y)O_2$

- Structure apatite: $L_{10}M_6O_{24}$

  o Exemple: $La_{10}Si_6O_{27}$

- Structure Aurivillius $(Bi_2O_2)(A_{n-1}B_nO_x)$

  o Exemples: $Bi_3Nb_{0.1}Zr_{0.9}O_{6.55}$, $Bi_5TiNbWO_{15}$ , $Bi_4Ti_3O_{12}$

- Structure $L_2Mo_2O_9$

  o Exemple: $La_2Mo_2O_9$

- Structure pyrochlore $L_2Zr_2O_7$

Dans les formules génériques des structures mentionnées ci-dessus, A désigne un élément alcalin ou alcalino-terreux, B et M désignent des métaux de transition appartenant aux groupes 3 à 14 de la classification périodique, et L désigne une terre rare.

La première couche 2 est réalisée de façon :

- à être constituée de particules solides élémentaires reliées en contact les unes avec les autres, la taille moyenne de ces particules élémentaires étant inférieure à 300 nm,

- et à présenter une épaisseur totale inférieure à 200 nm -typiquement de l'ordre de 50 nm- ; une porosité en volume inférieure à 10 % -typiquement comprise entre 1 % et 5 %- ; et une conductivité ionique supérieure ou égale à $10^{-2}$ $S.cm^{-1}$ -typiquement de l'ordre de $5.10^{-2}$ $S.cm^{-1}$-.

Pour ce faire, on peut avantageusement utiliser un procédé de dépôt de type sol-gel. Dans un tel procédé, on mélange dans un milieu liquide neutre des précurseurs des espèces aptes à former au moins un oxyde mixte, puis on mélange cette suspension à une matrice polymère organique, puis on applique ce mélange sur le substrat solide, puis on soumet l'ensemble à un traitement thermique adapté pour entraîner la cristallisation de chaque oxyde mixte et la décomposition de la matrice polymère organique. Avec un tel procédé, on peut en particulier ajuster la porosité de la couche obtenue en faisant varier la proportion de matrice polymère organique par rapport aux précurseurs inorganiques. Typiquement, le rapport molaire entre la quantité de matrice polymère organique sur la quantité des précurseurs inorganiques est compris entre quatre et six. La concentration des précurseurs utilisés dans la suspension initiale permet par ailleurs de contrôler l'épaisseur totale de la couche formée. En pratique, ce procédé peut être mis en oeuvre par toute technique connue, de préférence selon la technique dite de revêtement par trempage («dip-coating») dans laquelle le substrat solide est plongé dans le mélange liquide, puis extrait de ce mélange avec une vitesse- contrôlée, puis soumis à un traitement thermique à haute température, généralement supérieure à 700°C.

En outre, pour réaliser cette première couche 2, on utilise de préférence un matériau constitué d'au moins un oxyde mixte choisi dans le groupe des phases de Ruddlesden-Popper répondant à la formule (I) avec $n-x \neq 1$. Plus particulièrement, on choisit ledit matériau de telle sorte que $(n+1-x)/(n-y) < 2$.

D'excellents résultats ont été obtenus avec une première couche 2 constituée d'un oxyde mixte de formule $L_{2-x}NiO_{4+\delta}$, L étant choisi dans le groupe formé de La, Pr, Nd.

Au moins une autre couche différente 3, 4 est superposée à cette première couche 2. Le nombre de couches superposées peut être variable. Les inventeurs ont cependant constaté qu'à partir d'un nombre de couches superposées supérieur à cinq, les performances de l'électrode ne sont pas sensiblement améliorées. En conséquence, une électrode selon l'invention comprend avantageusement un nombre total de couches superposées sur le substrat solide compris entre deux et cinq.

Quoi qu'il en soit, les différentes couches 3, 4 superposées à la première couche 2 sont constituées d'un matériau correspondant à la même famille (formule (I)), de préférence avec des éléments L et M identiques dans toutes les couches de la même électrode, mais uniquement en faisant varier éventuellement, d'une couche à l'autre, les proportions des différents éléments dans la formule (I), c'est-à-dire les valeurs des paramètres *n, x, y* et δ de la formule (I).

En outre, les différentes couches 3, 4 superposées à la première couche 2 présentent une microstructure différente de celle de la première couche 2. Cette variation de microstructures peut résulter en particulier de l'utilisation d'un procédé de dépôt différent. Les inventeurs ont en effet constaté que les matériaux répondant à la formule (I) peuvent être déposés selon différents procédés, et que le choix du procédé utilisé pour le dépôt permet de faire varier la microstructure et en particulier la porosité et les propriétés de conduction électronique et ionique de chaque couche déposée.

En particulier, la dernière couche 4 de l'électrode qui vient au contact du gaz, notamment de l'air, est réalisée de façon à être constituée de particules solides élémentaires formant entre elles des pores ouverts et constituant un réseau interconnecté de matière solide à travers toute son épaisseur, ces particules solides élémentaires étant reliées en contact les unes avec les autres avec une taille moyenne des particules élémentaires comprise entre 100 nm et 5 $\mu$m - typiquement de l'ordre de 1 $\mu$m-.

L'épaisseur de la dernière couche 4 est avantageusement comprise entre 1 $\mu$m et 5 $\mu$m.

De même, l'épaisseur de chaque couche intermédiaire 3 superposée à la première couche 2 est avantageusement comprise entre 1 $\mu$m et 5 $\mu$m.

L'épaisseur des différentes couches de l'électrode, et en particulier de la dernière couche 4 et de chaque couche intermédiaire 3 superposée à la première couche 2, est ajustée de façon à obtenir une épaisseur totale de l'électrode appropriée.

Cette épaisseur totale de l'électrode doit être suffisante d'une part pour permettre une activité électrocatalytique suffisante (cette activité dépendant de la quantité de matière au contact de laquelle les espèces réactives peuvent venir), d'autre part pour présenter une bonne tenue thermomécanique et éviter les courts-circuits en fonctionnement. Pour ce faire, l'épaisseur totale de l'électrode est supérieure à 1 $\mu$m, et de préférence supérieure à 5 $\mu$m. A l'inverse, l'épaisseur totale de l'électrode doit être aussi faible que possible pour présenter une résistivité qui n'est pas trop élevée et pour limiter les coûts de fabrication.

L'invention permet de satisfaire à l'ensemble de ces conditions, avec une électrode dont l'épaisseur est comprise entre 1 $\mu$m et 15 $\mu$m.

Ainsi, l'épaisseur totale de l'électrode selon l'invention est de préférence comprise entre 1 $\mu$m et 15 $\mu$m.

La porosité en volume de la dernière couche 4 est comprise entre 10 % et 50 % -typiquement de l'ordre de 30 %-. La dernière couche 4 est par ailleurs réalisée de façon à présenter une conductivité ionique supérieure à $10^{-4}$ S.cm$^{-1}$, et une conductivité électronique supérieure à 50 S.cm$^{-1}$.

Pour obtenir de telles caractéristiques structurelles, on peut en particulier réaliser la dernière couche 4 par un dépôt de barbotine, c'est-à-dire en réalisant une barbotine contenant des particules d'oxyde(s) mixte(s) dispersées en suspension dans un milieu liquide, en appliquant cette barbotine sous forme d'une couche, puis en soumettant l'ensemble à un traitement -notamment un traitement thermique- adapté pour entraîner l'évacuation du milieu liquide. Un tel dépôt de suspension chargée en particules d'oxyde(s) mixte(s) peut être réalisé en pratique selon différentes techniques connues en elles-mêmes, par exemple le revêtement par trempage («dip-coating»), le revêtement en rotation («spin-coating»), le coulage en bande,...

Le milieu liquide utilisé pour réaliser la barbotine peut être un solvant aqueux ou un solvant organique (par exemple choisi parmi un alcool, une cétone,...). Les particules solides de chaque oxyde mixte peuvent être elles-mêmes obtenues par voie sol-gel, en préparant une suspension de sels des espèces précurseurs dans un solvant, en ajoutant une matrice polymère organique dans cette suspension, puis en soumettant l'ensemble à un traitement thermique à une température comprise entre 700° C et 1000° C. Le choix de la température permet en particulier d'influencer la taille des particules d'oxyde(s) obtenues.

Les particules obtenues sont dispersées dans le solvant liquide pour former la barbotine. Avantageusement, on ajoute également une certaine proportion minoritaire d'au moins un agent porogène, par exemple choisi parmi l'amidon, le carbone, un composé fluorocarboné (par exemple PTFE)... Un tel agent porogène inerte est également éliminé lors de la phase subséquente de traitement thermique.

Le traitement d'élimination du milieu liquide de la suspension peut être une calcination haute température, typiquement de l'ordre de 1000° C. Rien n'empêche également, en variante ou en combinaison, d'employer tout autre traitement d'élimination, par exemple par évaporation.

On obtient une couche 4 homogène adhérente non fissurée présentant une épaisseur de l'ordre de plusieurs microns.

Il est à noter également qu'en variante, la dernière couche 4 peut être formée non pas par un dépôt de barbotine, mais par un dépôt dit dépôt de sol chargé. Un dépôt de sol chargé diffère d'un dépôt de barbotine en ce que le milieu liquide contient à la fois des particules solides d'oxyde(s) mixte(s) et des particules d'espèces précurseurs d'oxyde(s) mixte(s), c'est-à-dire en pratique des particules de sels métalliques, comme dans un dépôt de type sol-gel. Un dépôt de sol chargé diffère également d'un dépôt sol-gel en ce qu'on n'ajoute pas de matrice polymère organique à la suspension liquide.

D'excellents résultats ont été obtenus avec une dernière couche 4 constituée d'un oxyde mixte choisi dans le groupe formé de $LNiO_3$, $L_{2-x}NiO_{4+\delta}$, $L_3Ni_2O_{7-\delta}$, et $L_4Ni_3O_{10-\delta}$, L étant choisi dans le groupe formé de La, Pr, Nd.

Au moins une couche intermédiaire 3 peut-être interposée entre ladite première couche 2 et ladite dernière couche 4. Une telle couche intermédiaire 3 présente des caractéristiques intermédiaires entre celles de la première couche 2 et celles de la dernière couche 4, notamment en ce qui concerne sa porosité et ses propriétés de conduction ionique et de conduction électronique. En particulier, la porosité des différentes couches est croissante depuis celle de la première couche 2 jusqu'à celle de la dernière couche 4. En outre, la première couche 2 présente la plus grande conductivité ionique, et la conductivité ionique est décroissante depuis celle de la première couche 2 jusqu'à celle de la dernière couche 4. À l'inverse, la première couche 2 présente la plus faible conductivité électronique, et la conductivité électronique est croissante depuis celle de la première couche 2 jusqu'à celle de la dernière couche 4.

De préférence, chaque couche intermédiaire 3 résulte d'un dépôt choisi parmi un dépôt de barbotine et un dépôt de sol chargé, c'est-à-dire est réalisé selon un procédé de dépôt similaire à celui de la dernière couche 4. Ainsi, la microstructure de chaque couche intermédiaire 3 est similaire à celle de la dernière couche 4, et donc différente de celle de la première couche 2.

Une électrode à gaz selon l'invention présente donc un gradient de microstructure, de porosité et de composition à travers son épaisseur, depuis le substrat solide 1, jusqu'à sa surface externe libre destinée à être placée au contact d'un gaz.

Une telle électrode à gaz selon l'invention peut faire office de cathode pour une cellule électrochimique formant une pile à combustible à oxyde solide, apte à convertir de l'énergie chimique en énergie électrique à une température de fonctionnement comprise entre 600 °C et 800 °C. Dans la cathode placée au contact de l'air, l'oxygène gazeux est réduit en anions $O^{2-}$ qui diffusent à travers l'électrolyte pour réagir avec l'hydrogène issu de l'anode disposée sur une face opposée du substrat électrolytique. Une telle anode peut être formée d'un composite de céramique-métal (couramment désigné « cermet ») poreux, par exemple une céramique similaire à celle constituant l'électrolyte solide, mais dans laquelle un métal a été dispersé, par exemple du nickel métallique.

Exemples :

On a réalisé six échantillons d'électrodes conformes à l'invention, référencés ci-après respectivement [1], [2], [3], [4], [5] et [6].

Le protocole expérimental de préparation de ces échantillons est le suivant.

Échantillon [1]:

Préparation par dépôt sol-gel de la première couche 2 :

La première couche 2 est réalisée par trempage-retrait (« dip-coating ») d'un substrat 1 formé d'une pastille de zircone yttriée (YSZ) poli de 1 cm de diamètre, avec une vitesse contrôlée (3 cm/min) dans un sol polymère.

Le sol est préparé à partir du protocole décrit par US3330697 (Péchini), et résulte du mélange de précurseurs des oxydes, de type nitrate de nickel et nitrate de lanthane, introduits dans les proportions stoechiométriques. Pour cet échantillon, les précurseurs sont introduits avec un rapport cationique $La^{3+}/Ni^{2+}$ égal à 1,98 ce qui permet de former après recuit du sol l'oxyde $La_{1.98}NiO_{4+\delta}$.

Des agents organiques sont également ajoutés, notamment de l'acétylacétone, de l'hexaméthylénetétramine, et de l'acide acétique. Après chauffage du sol à 70°C. pendant une dizaine de minutes de manière à obtenir une viscosité adéquate (de l'ordre de 30 mPa.s), le dépôt est réalisé.

Le film de sol est ensuite calciné sous air à 700°C pendant 2h00, avec une montée en température lente (50°C/h), afin d'éliminer les composés organiques et procéder à la cristallisation de l'oxyde.

Préparation par dépôt de barbotine de la couche intermédiaire 3:

La couche intermédiaire 3 est réalisée par trempage-retrait (« dip-coating ») du substrat 1 YSZ recouvert par la première couche 2 cristallisée, avec une vitesse contrôlée (3 cm/min) dans une suspension.

La suspension est préparée à partir de la dispersion d'une poudre céramique de l'oxyde $La_4Ni_3O_{10}$ dans un milieu organique ou aqueux. Ledit milieu peut contenir différents surfactants, tels qu'un agent dispersant, un agent de liaison et un agent plastifiant. Par ailleurs, la suspension peut également contenir un agent porogène. La poudre céramique est obtenue par calcination sous air des sols polymères, à 1000°C pendant 2h. La suspension est homogénéisée, par exemple grâce à l'utilisation d'ultrasons.

La couche obtenue est ensuite calcinée sous air à 1000°C pendant 2h. Pour augmenter l'épaisseur de cette couche poreuse, plusieurs dépôts peuvent être réalisés et/ou la charge en particules céramiques peut être augmentée.

Préparation par dépôt de barbotine de la dernière couche 4 :

La dernière couche 4 est préparée de la même façon que la couche intermédiaire 3, mais avec une poudre dont la composition est $La_2NiO_{4+\delta}$.

Échantillon [2] :

La première couche 2 de cet échantillon est réalisée comme indiquer ci-dessus pour l'échantillon [1], mais avec un rapport cationique $La^{3+}/Ni^{2+}$ égal à 1,33 qui permet de former après recuit du sol l'oxyde $La_4Ni_3O_{10}$.

La couche intermédiaire 3 est préparée comme décrit ci-dessus dans le cas de l'échantillon [1].

La dernière couche 4 est préparée par dépôt de barbotine comme décrit ci-dessus dans le cas de l'échantillon [1], avec une poudre dont la composition est $LaNiO_3$. Pour obtenir des grains de diamètre supérieur au micron, la poudre est recuite sous air à une température supérieure à la température de calcination des sols, par exemple 1200°C, et/ou pendant une durée de palier en température supérieure à 2h, par exemple 10h.

Échantillon [3]:

La première couche 2 est préparée comme décrit ci-dessus dans le cas de l'échantillon [1].

La couche intermédiaire 3 est préparée comme décrit ci-dessus dans le cas de l'échantillon [1], mais en utilisant une poudre dont la composition est $La_2NiO_{4+\delta}$.

La dernière couche 4 est préparée comme décrit ci-dessus dans le cas de l'échantillon [2], mais avec une poudre dont la composition est $La_4Ni_3O_{10}$.

Échantillon [4] :

La première couche 2 est réalisé par un dépôt sol-gel comme décrit ci-dessus dans le cas de l'échantillon [1], mais avec un mélange de nitrate de nickel et nitrate de néodyme introduits avec un rapport cationique $Nd^{3+}/Ni^{2+}$ égal à 1,95.

Le rapport molaire total des cations $Nd^{3+}$ et $Ni^{2+}$ sur l'agent chélatant (l'acétylacétone) est fixé à 3. Le rapport molaire de l'acétylacétone sur l'hexaméthylénetétramine est fixé à 1.

Trois dépôts ont été réalisés avec, après chaque dépôt, une étape de calcination à 700°C.

La dernière couche 4 de cet échantillon [4] (qui ne comprend que deux couches 2, 4 empilées sur le substrat 1) est réalisée par un dépôt de barbotine, avec une barbotine formée de 10 g de poudre de $Nd_{1.95}NiO_4$ dispersée dans 15 g de solvant. Le solvant est un mélange azéotropique d'éthylméthylcétone et d'éthanol (66/34 % volumique). La barbotine contient également 100 mg d'un dispersant commercial référencé C213 et 1 g de liant de type polyéthylène glycol. La dernière couche 4 poreuse est déposée sur la première couche 2 et l'échantillon est calciné sous air à 1000°C pendant 1h, avec un palier court à 400°C. La vitesse de chauffe est de 1°C/min jusqu'à 400°, puis 5°C/min jusqu'à 1000°C.

Échantillon [5] :

La première couche 2 de cet échantillon est réalisée par un dépôt sol-gel comme décrit dans le cas de l'échantillon [4] avec un mélange de nitrate de nickel et nitrate de néodyme introduits avec un rapport cationique $La^{3+}/Ni^{2+}$ égal à 1,98. Des agents organiques sont également ajoutés, tels que de l'acétylacétone, de l'hexaméthylénetétramine, et de l'acide acétique. Le rapport molaire total des cations $La^{3+}$ et $Ni^{2+}$ sur l'agent chélatant (l'acétylacétone) est fixé à 3. Le rapport molaire de l'acétylacétone sur l'hexaméthylénetétramine est fixé à 1.

Le film de sol est ensuite calciné sous air à 700°C pendant 2h00, avec une montée en température lente (50°C/h). Trois dépôts ont été réalisés avec, après chaque dépôt, une étape de calcination à 700°C avec une vitesse de montée en température de 100°C/h.

La deuxième et dernière couche 4 poreuse de cet échantillon est réalisée par un dépôt de barbotine constituée de 10 g de poudre d'oxyde mixte $La_4Ni_3O_{10}$ dispersée dans 15 g de solvant. Le solvant est un mélange azéotropique d'éthlylméthylcétone et d'éthanol (66/34 % volumique). La barbotine contient également 100 mg d'un dispersant commercial référencé C213 et 1 g de liant de type polyéthylène glycol. La couche 4 poreuse est déposée sur la première couche 2 et l'échantillon est calciné sous air à 1000°C pendant 1h, avec un palier court à 400°C. La vitesse de chauffe est de 1°C / min jusqu'à 400°, puis 5°C / min jusqu'à 1000°C.

Échantillon [6] :

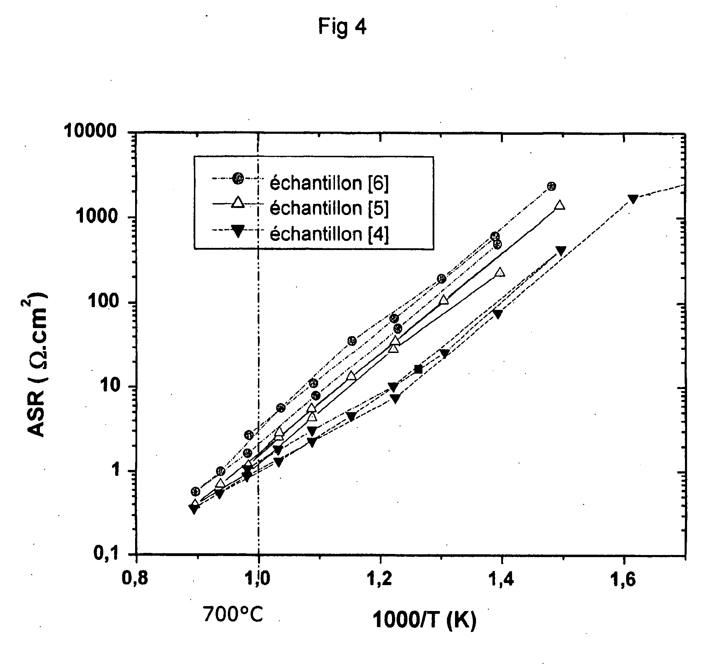

La première couche 2 de cet échantillon est préparée comme décrit ci-dessus dans le cas de l'échantillon [4].
La deuxième et dernière couche 4 poreuse de cet échantillon est préparée par dépôt de barbotine comme décrit ci-dessus dans le cas de l'échantillon [5].
Le tableau ci-après exprime les principales caractéristiques des différents échantillons.

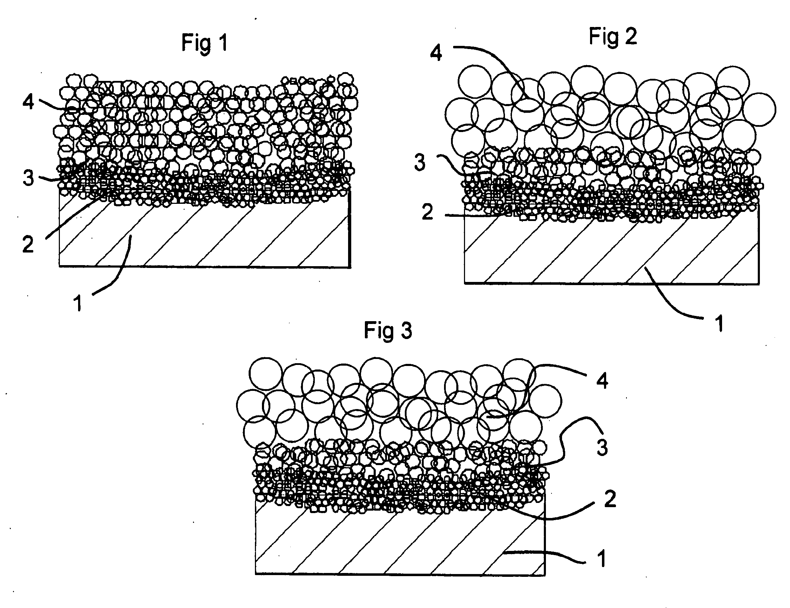

Les figures 1 à 3 sont des schémas illustrant la microstructure des électrodes conformes respectivement aux échantillons [1], [2] et [3].
Par ailleurs, on a réalisé des mesures d'impédance sur les échantillons [4] à [6]. La conductivité totale des demi-cellules formant les échantillons a été mesurée par spectroscopie d'impédance complexe, technique qui permet de séparer les contributions de l'électrolyte et de la réaction d'électrode (cette dernière étant liée au matériau constitutif de l'électrode et à l'architecture des différents dépôts). Les mesures ont été enregistrées par un impédancemètre Solartron ® 1260 et traitées par un logiciel Z-View®. L'amplitude de la tension alternative a été fixée à 50 mV. Les mesures ont été effectuées sous air atmosphérique pour des températures comprises entre 100°C et 800°C et pour des fréquences variant de $10^6$ Hz à $10^{-2}$ Hz ou $5.10^{-3}$ Hz. La résistance de polarisation de la cathode est déterminée à partir de l'extrapolation sur l'axe des réels des contributions électriques apparentes aux moyennes et basses fréquences. Ces deux contributions sont généralement modélisables par deux demi-cercles adjacents ou superposés, en mode de représentation des diagrammes de Nyquist. La résistance de polarisation spécifique ASR dont la valeur est représentée figure 4 est déterminée par la formule :

$$ASR = Rp.S/2$$

où S est l'aire macroscopique de la surface libre de l'électrode au contact de l'air.
Comme on le voit sur la figure 4, les échantillons conformes à l'invention [4], [5], et [6] fonctionnent tous à 700°C, et même pour certains à une température plus faible, pouvant aller jusqu'à 650°C, et présentent tous une valeur de résistance de polarisation spécifique très satisfaisante, de l'ordre de $1\Omega.cm^2$ à 800°C.
De surcroît, on constate que les échantillons conformes à l'invention présentent une tenue chimique stable. Ce résultat s'appuie notamment sur des tests de réactivité réalisés à partir de la calcination à 800°C sous air pendant 3 semaines de mélange pulvérulent des oxydes YSZ, matériau d'électrolyte, et des oxydes mixtes de la formule (I). Aucune phase parasite n'a été observée suite à cette expérimentation. Par ailleurs, des tests similaires ont été réalisés sur couches, et ont conduit aux mêmes résultats. Enfin, des études réalisées avec des matériaux d'électrolytes conducteurs de protons de type $LBO_4$, ont conduit aux mêmes résultats. L'analyse des échantillons testés a été effectuée par diffraction des RX des mélanges pulvérulents et des surfaces des différentes couches, ainsi que par des études microscopiques couplées à des études par spectroscopie de dispersion électronique réalisées sur des coupes en tranches des cellules électrochimiques.
Ainsi, les différents échantillons conformes à l'invention sont largement compatibles avec une application dans une pile à combustible par exemple. Les matériaux constitutifs d'une électrode selon l'invention et les procédés de fabrication mis en oeuvre sont par ailleurs économiques, et peuvent être réalisés à l'échelle industrielle dans de bonnes conditions de rentabilité.

| échantillon | [1]<br>figure 1 | [2]<br>figure 2 | [3]<br>figure 3 | [4] | [5] | [6] |
|---|---|---|---|---|---|---|
| substrat solide | zircone yttriée | zircone yttriée | zircone yttriée | zircone yttriée | zircone yttriée | zircone yttriée |
| première couche<br>   procédé de dépôt | $La_{2-x}NiO_4$<br>sol-gel | $La_4Ni_3O_{10}$<br>sol-gel | $La_{2-x}NiO_4$<br>sol-gel | $Nd_{1,95}NiO_4$<br>sol-gel | $La_{1,98}NiO_4$<br>sol-gel | $Nd_{1,95}NiO_4$<br>sol-gel |
|    taille des grains | 200 nm | 200 nm | 200 nm | | | |
|    porosité | 10% | 10% | 10% | | | |
|    épaisseur | 300 nm | 300 nm | 300 nm | | | |
| couche intermédiaire | $La_4Ni_3O_{10}$ | $La_4Ni_3O_{10}$ | $La_2NiO_4$ | - | - | - |

(suite)

| échantillon | [1] figure 1 | [2] figure 2 | [3] figure 3 | [4] | [5] | [6] |
|---|---|---|---|---|---|---|
| procédé de dépôt | barbotine | barbotine | barbotine | - | - | - |
| taille des grains | 1 à 3 $\mu$m | 1 à 3 $\mu$m | 1 à 3 $\mu$m | - | - | - |
| porosité | 30% | 30% | 30% | - | - | - |
| épaisseur | 7 $\mu$m | 7 $\mu$m | 5 $\mu$m | - | - | - |
| dernière couche procédé de dépôt | $La_2NiO_4$ barbotine | $LaNiO_3$ barbotine | $La_4Ni_3O_{10}$ barbotine | $Nd_{1,95}NiO_4$ barbotine | $La_4Ni_3O_{10}$ | $La_4Ni_3O_{10}$ |
| taille des grains | 1 à 3 $\mu$m | 3 à 5 $\mu$m | 3 à 5 $\mu$m | | | |
| porosité | 40% | 40% | 40% | | | |
| épaisseur | 7 $\mu$m | 10 $\mu$m | 10 $\mu$m | | | |

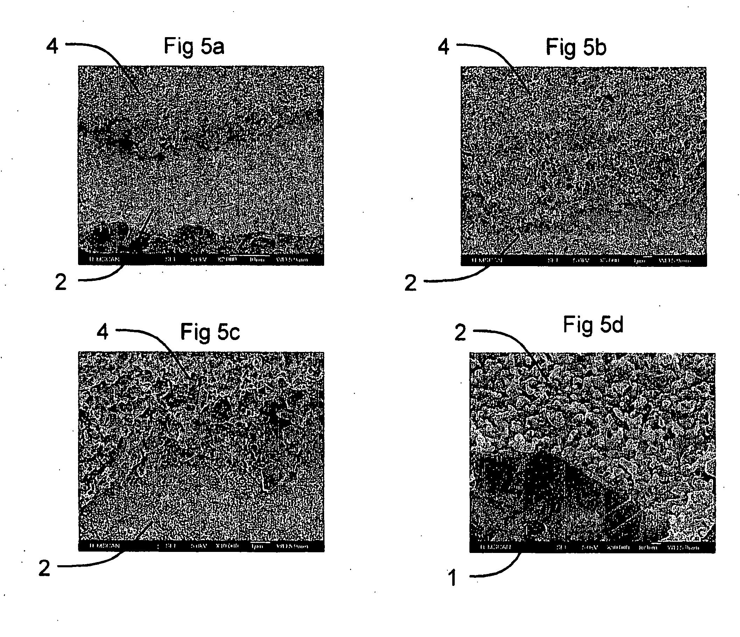

Les figures 5a, 5b, 5c, 5d représentent des photographies au microscope électronique de différentes parties de l'échantillon [4] conforme à l'invention.

Les figures 5a, 5b, 5c représentent l'interface entre la première couche 2 et 1a dernière couche 4 qui lui est superposée avec un grossissement variable (x 2000, x 5000, et x 10 000 respectivement). La figure 5d montre l'interface entre l'électrolyte 1 et la première couche 2. Comme on le voit, la première couche 2 est poreuse, mais moins poreuse que la dernière couche 4. On constate en outre que les différentes caractéristiques structurelles mentionnées ci-dessus sont bien obtenues.

Il va de soi que l'invention peut faire l'objet de très nombreuses variantes de réalisation par rapport aux seuls modes de réalisation décrits et représentés sur les figures. Eh particulier, le nombre de couches peut varier. Pour chaque couche déposée, il est facile d'ajuster les caractéristiques de chaque étape de dépôt pour obtenir la porosité souhaitée et les propriétés de conduction ionique et électronique appropriées.

**Revendications**

1.    Électrode à gaz comprenant une pluralité de couches (2, 3, 4) empilées les unes sur les autres à partir d'un substrat solide (1) tel qu'un électrolyte solide, les différentes couches (2, 3, 4) étant adaptées pour permettre le passage d'espèces réactives à travers l'épaisseur de cette électrode, et comprenant une première couche (2) en contact avec ledit substrat solide (1) et une dernière couche (4) présentant une surface libre externe destinée à être placée en contact avec un gaz, chacune desdites couches étant constituée d'au moins un oxyde mixte,
**caractérisée en ce que** :

- chacune desdites couches (2, 3, 4) est constituée d'au moins un oxyde mixte choisi dans le groupe formé des pérovskites, et des phases de Ruddlesden-Popper répondant à la formule générale (I) suivante :

$$L_{n+1-x}Ni_{n-y}M_yO_{3n+1\pm\delta}$$

où L est un élément choisi dans le groupe des terres rares, Ni représente le nickel, M est un métal de transition, n est un nombre entier non nul, $x$; $y$ et $\delta$ sont des nombres réels satisfaisant les relations suivantes :

$$0 \leq x < n+1$$

$$0 \leq y < n$$

$$0 \le \delta \le 0,25,$$

- ladite première couche (2) est constituée d'au moins un oxyde mixte choisi dans le groupe des phases de Ruddlesden-Popper répondant à la formule (I),
- la microstructure de ladite première couche (2) est différente de la microstructure de ladite dernière couche (4),
- la porosité des différentes couches (2, 3, 4) augmente depuis ladite première couche (2) dont la porosité est la plus faible jusqu'à ladite dernière couche (4) dont la porosité est la plus importante,
- les différentes couches (2, 3, 4) empilées les unes sur les autres forment un réseau de matière solide interconnectée entre la surface libre externe de la dernière couche (4) et le substrat solide (1), en présentant une épaisseur totale supérieure à 1 $\mu$m.

2. Électrode selon la revendication 1, **caractérisée en ce que** la microstructure de ladite première couche (2) est différente de la microstructure de la couche (3, 4) superposée au contact de cette première couche (2).

3. Électrode selon l'une des revendications 1 ou 2, **caractérisée en ce que** la différence de microstructures provient de proportions différentes pour les différents éléments constitutifs du matériau.

4. Électrode selon l'une des revendications 1 à 3, **caractérisée en ce que** ladite dernière couche (4) est constituée d'au moins un oxyde mixte choisi dans le groupe formé des pérovskites et des phases de Ruddlesden-Popper répondant à la formule (I), et toutes les autres couches (2, 3) sont constituées d'au moins un oxyde mixte choisi dans le groupe formé des phases de Ruddlesden-Popper répondant à la formule générale (I).

5. Électrode selon l'une des revendications 1 à 4, **caractérisée en ce que** chacune des couches (2, 3, 4) est constituée d'au moins un oxyde mixte choisi dans le groupe formé des phases de Ruddlesden-Popper répondant à la formule générale (I), et **en ce que** les éléments L et M sont les mêmes pour toutes lesdites couches (2, 3, 4) de l'électrode.

6. Électrode selon l'une des revendications 1 à 5, **caractérisée en ce que** L est un élément choisi dans le groupe formé de La, Pr, Nd, Sm, Eu, Er, et Gd, et M est un métal de transition choisi dans le groupe formé de Fe, Co, et Mn.

7. Électrode selon l'une des revendications 1 à 6, **caractérisée en ce que** pour ladite première couche (2), on a n-x $\neq$ 1.

8. Électrode selon l'une des revendications 1 à 7, **caractérisée en ce que** pour ladite première couche (2), on a (n+1-x) /(n-y) < 2.

9. Électrode selon l'une des revendications 1 à 8, **caractérisée en ce que** ladite première couche (2) est constituée d'un oxyde mixte de formule $L_{2-x}NiO_{4+\delta}$, L étant choisi dans le groupe formé de La, Pr, Nd.

10. Électrode selon l'une des revendications 1 à 9, **caractérisée en ce que** ladite dernière couche (4) est constituée d'un oxyde mixte choisi dans le groupe formé de $LNiO_3$, $L_{2-x}NiO_{4+\delta}$, $L_3Ni_2O_{7-\delta}$, et $L_4Ni_3O_{10-\delta}$, L étant choisi dans le groupe formé de La, Pr, Nd.

11. Électrode selon l'une des revendications 1 à 10, **caractérisée en ce que** ladite première couche (2) est constituée de particules solides élémentaires reliées en contact les unes avec les autres, la taille moyenne de ces particules élémentaires étant inférieure à 300 nm.

12. Électrode selon l'une des revendications 1 à 11, **caractérisée en ce que** l'épaisseur de ladite première couche (2) est inférieure à 200 nm -notamment de l'ordre de 50 nm-.

13. Électrode selon l'une des revendications 1 à 12, **caractérisée en ce que** ladite dernière couche (4) est constituée de particules solides élémentaires formant entre elles des pores ouverts et constituant un réseau interconnecté de matière solide à travers toute son épaisseur.

14. Électrode selon l'une des revendications 1 à 13, **caractérisée en ce que** ladite dernière couche (4) est constituée de particules solides élémentaires reliées en contact les unes avec les autres, la taille moyenne de ces particules élémentaires étant comprise entre 100 nm et 5 $\mu$m.

**15.** Électrode selon l'une des revendications 1 à 14, **caractérisée en ce qu'**elle comprend entre deux et cinq couches empilées sur le substrat solide, les différentes couches (2, 3, 4) empilées présentant une épaisseur totale comprise entre 1 $\mu$m et 15 $\mu$m.

**16.** Électrode selon l'une des revendications 1 à 15, **caractérisée en ce que** ladite première couche (2) présente une porosité inférieure à 10 % en volume.

**17.** Électrode selon l'une des revendications 1 à 16, **caractérisé en ce que** ladite dernière couche (4) présente une porosité supérieure à 10 % et inférieure à 50 % en volume.

**18.** Électrode selon l'une des revendications 1 à 17, **caractérisé en ce qu'**elle présente une pluralité de couches (3, 4) superposées à ladite première couche (2) en contact avec le substrat solide (1), et dont la porosité est croissante depuis ladite première couche (2) jusqu'à ladite dernière couche (4).

**19.** Électrode selon l'une des revendications 1 à 18, **caractérisé en ce que** chacune desdites couches (2, 3, 4) résulte d'au moins un dépôt choisi parmi un dépôt de barbotine, un dépôt de sol chargé, et un dépôt sol-gel.

**20.** Électrode selon les revendications 18 et 19, **caractérisée en ce qu'**au moins une couche intermédiaire (3) entre ladite première couche (2) et ladite dernière couche(4) résulte d'au moins un dépôt choisi parmi un dépôt de barbotine et un dépôt de sol chargé.

**21.** Électrode selon l'une des revendications 19 ou 20, **caractérisée en ce que** ladite première couche (2) résulte d'au moins un dépôt sol-gel.

**22.** Électrode selon l'une des revendications 19 à 21, **caractérisée en ce que** ladite dernière couche (4) résulte d'au moins un dépôt choisi parmi un dépôt de barbotine et un dépôt de sol chargé.

**23.** Électrode selon l'une des revendications 1 à 22, **caractérisée en ce que** parmi les différentes couches (2, 3, 4), ladite première couche (2) présente la plus grande conductivité ionique.

**24.** Électrode selon l'une des revendications 1 à 23, **caractérisée en ce que** ladite première couche (2) est formée d'un matériau dont la conductivité ionique est supérieure ou égale à $10^{-2}$ S.cm$^{-1}$.

**25.** Électrode selon l'une des revendications 1 à 24, **caractérisée en ce que** ladite dernière couche (4) est formée d'un matériau dont la conductivité ionique est supérieure à $10^{-4}$ S.cm$^{-1}$, et dont la conductivité électronique est supérieure à 50 S.cm$^{-1}$.

**26.** Procédé de fabrication d'une électrode à gaz dans lequel on empile une pluralité de couches les unes sur les autres à partir d'un substrat solide (1) tel qu'un électrolyte solide, les différentes couches (2, 3, 4) étant réalisées pour permettre le passage d'espèces réactives à travers l'épaisseur de cette électrode, et comprenant une première couche (2) en contact avec ledit substrat solide (1) et une dernière couche (4) présentant une surface libre externe destinée à être placée en contact avec un gaz, chacune desdites couches (2, 3, 4) étant constituée d'au moins un oxyde mixte, **caractérisé en ce que** :

- on réalise chacune desdites couches (2, 3, 4) de façon à ce qu'elle soit constituée d'au moins un oxyde mixte choisi dans le groupe formé des pérovskites, et des phases de Ruddlesden-Popper répondant à la formule générale (I) suivante :

$$L_{n+1-x}Ni_{n-y}M_yO_{3n+1\pm\delta}$$

où L est un élément choisi dans le groupe des terres rares, Ni représente le nickel, M est un métal de transition, n est un nombre entier non nul, x, *y* et $\delta$ sont des nombres réels satisfaisant les relations suivantes :

$$0 \leq x < n+1$$

$$0 \leq y < n$$

$$0 \leq \delta \leq 0{,}25,$$

- ladite première couche (2) est réalisée de façon à être constituée d'au moins un oxyde mixte choisi dans le groupe des phases de Ruddlesden-Popper répondant à la formule (I),
- on réalise ladite première couche (2) selon un procédé de dépôt différent du procédé de dépôt avec lequel on réalise ladite dernière couche (4), de sorte que :

• la microstructure de ladite première couche (2) est différente de la microstructure de ladite dernière couche (4),
• la porosité des différentes couches (2, 3, 4) augmente depuis ladite première couche (2) dont la porosité est la plus faible jusqu'à ladite dernière couche (4) dont la porosité est la plus importante,

- on réalise les différentes couches (2, 3, 4) empilées de telle façon qu'elles forment un réseau de matière solide interconnectée entre la surface libre externe de la dernière couche (4) et le substrat solide (1), en présentant une épaisseur totale supérieure à 1 $\mu$m.

27. Procédé selon la revendication 26, **caractérisé en ce qu'**on réalise ladite première couche (2) selon un procédé de dépôt différent du procédé de dépôt de la couche (3, 4) superposée au contact de cette première couche.

28. Procédé selon l'une des revendications 26 ou 27, **caractérisé en ce qu'**on dépose ladite première couche (2) sur le substrat solide par au moins un dépôt sol-gel dans lequel on mélange dans un solvant des espèces précurseurs destinées à former au moins un oxyde mixte, puis on mélange la suspension à une matrice polymère organique, puis on applique ce mélange sur le substrat solide, puis on soumet l'ensemble à un traitement thermique adapté pour entraîner la cristallisation de chaque oxyde mixte et la décomposition de la matrice polymère organique.

29. Procédé selon l'une des revendications 26 à 28, **caractérisé en ce qu'**on applique ladite dernière couche (4) en réalisant au moins un dépôt de barbotine dans lequel on réalise une barbotine contenant des particules solides d'au moins un oxyde mixte dispersées dans un milieu liquide, puis on applique cette barbotine sous forme d'au moins une couche, puis on soumet l'ensemble à un traitement adapté pour entraîner l'évacuation du milieu liquide.

30. Procédé selon l'une des revendications 26 à 29, **caractérisé en ce qu'**on applique ladite dernière couche (4) en réalisant au moins un dépôt de sol chargé dans lequel on réalise une suspension contenant des particules solides dispersées dans une solution liquide de précurseurs d'espèces destinées à former au moins un oxyde mixte, puis on applique cette suspension sous forme d'au moins une couche, puis on soumet l'ensemble à un traitement adapté pour entraîner le dépôt et la cristallisation des oxydes mixtes et l'évacuation de la phase liquide.

31. Procédé selon l'une des revendications 26 à 30, **caractérisé en ce qu'**on dépose sur le substrat solide (1) entre deux et cinq couches (2, 3, 4), les différentes couches (2, 3, 4) empilées présentant une épaisseur totale comprise entre 1 $\mu$m et 15 $\mu$m.

32. Procédé selon l'une des revendications 26 à 31, **caractérisé en ce que** le substrat solide (1) est un électrolyte solide étanche aux gaz choisi dans le groupe constitué des céramiques conductrices des anions $O^{2-}$ et des céramiques conductrices des protons.

33. Cellule électrochimique comprenant au moins une électrode à gaz, **caractérisée en ce qu'**elle comprend au moins une électrode à gaz conforme à l'une des revendications 1 à 25.

34. Cellule électrochimique de pile à combustible, **caractérisée en ce qu'**elle comprend un électrolyte solide portant une cathode formée d'une électrode à air conforme à l'une des revendications 1 à 25.

35. Cellule électrochimique selon l'une des revendications 33 ou 34, **caractérisée en ce que** l'électrode à gaz présente une forme globalement plane.

**36.** Cellule électrochimique selon l'une des revendications 33 ou 34, **caractérisée en ce qu'**elle présente une forme globalement cylindrique -notamment cylindrique de révolution-.

**Claims**

**1.** Gas electrode comprising a plurality of layers (2, 3, 4) stacked on top of one another on the basis of a solid substrate (1) such as a solid electrolyte, the various layers (2, 3, 4) being suitable to enable the passage of reactive species across the thickness of this electrode, and comprising a first layer (2) in contact with said solid substrate (1) and a last layer (4) exhibiting a free outer surface intended to be placed in contact with a gas, each of said layers being constituted by at least one mixed oxide,
**characterized in that**:

- each of said layers (2, 3, 4) is constituted by at least one mixed oxide chosen from the group constituted by the perovskites and by the Ruddlesden-Popper phases corresponding to the following general formula (I):

$$L_{n+1-x}\mathrm{Ni}_{n-y}M_yO_{3n+1\pm\delta}$$

where $L$ is an element chosen from the group of the rare earths, Ni represents nickel, $M$ is a transition metal, $n$ is a non-zero integer, $x$, $y$ and $\delta$ are real numbers satisfying the following relations:

$$0 \leq x < n+1$$

$$0 \leq y < n$$

$$0 \leq \delta \leq 0.25,$$

- said first layer (2) is constituted by at least one mixed oxide chosen from the group of the Ruddlesden-Popper phases corresponding to the formula (I),
- the microstructure of said first layer (2) is different from the microstructure of said last layer (4),
- the porosity of the various layers (2, 3, 4) increases from said first layer (2), the porosity of which is the lowest, to said last layer (4), the porosity of which is the most substantial,
- the various layers (2, 3, 4) stacked on top of one another form a network of interconnected solid matter between the free outer surface of the last layer (4) and the solid substrate (1), exhibiting a total thickness greater than 1 $\mu$m.

**2.** Electrode according to Claim 1, **characterized in that** the microstructure of said first layer (2) is different from the microstructure of the superposed layer (3, 4) in contact with this first layer (2).

**3.** Electrode according to one of Claims 1 or 2, **characterized in that** the difference in microstructures is due to different proportions for the various elements constituting the material.

**4.** Electrode according to one of Claims 1 to 3, **characterized in that** said last layer (4) is constituted by at least one mixed oxide chosen from the group constituted by the perovskites and by the Ruddlesden-Popper phases corresponding to formula (I), and all the other layers (2, 3) are constituted by at least one mixed oxide chosen from the group constituted by the Ruddlesden-Popper phases corresponding to the general formula (I).

**5.** Electrode according to one of Claims 1 to 4, **characterized in that** each of the layers (2, 3, 4) is constituted by at least one mixed oxide chosen from the group constituted by the Ruddlesden-Popper phases corresponding to the general formula (I), and **characterized in that** elements L and M are the same for all said layers (2, 3, 4) of the electrode.

6. Electrode according to one of Claims 1 to 5, **characterized in that** L is an element chosen from the group constituted by La, Pr, Nd, Sm, Eu, Er and Gd, and M is a transition metal chosen from the group constituted by Fe, Co and Mn.

7. Electrode according to one of Claims 1 to 6, **characterized in that** $n\text{-}x \neq 1$ holds for said first layer (2).

8. Electrode according to one of Claims 1 to 7, **characterized in that** $(n\text{+}1\text{-}x)\,/(n\text{-}y) < 2$ holds for said first layer (2).

9. Electrode according to one of Claims 1 to 8, **characterized in that** said first layer (2) is constituted by a mixed oxide of formula $L_{2\text{-}x}NiO_{4+\delta}$, L being chosen from the group constituted by La, Pr, Nd.

10. Electrode according to one of Claims 1 to 9, **characterized in that** said last layer (4) is constituted by a mixed oxide chosen from the group constituted by $LNiO_3$ , $L_{2\text{-}x}NiO_{4+\delta}$, $L_3Ni_2O_{7\text{-}\delta}$ and $L_4Ni_3O_{10\text{-}\delta}$, L being chosen from the group constituted by La, Pr, Nd.

11. Electrode according to one of Claims 1 to 10, **characterized in that** said first layer (2) is constituted by linked elementary solid particles in contact with one another, the average size of these elementary particles being less than 300 nm.

12. Electrode according to one of Claims 1 to 11, **characterized in that** the thickness of said first layer (2) is less than 200 nm, notably of the order of 50 nm.

13. Electrode according to one of Claims 1 to 12, **characterized in that** said last layer (4) is constituted by elementary solid particles forming open pores between themselves and constituting an interconnected network of solid matter across its entire thickness.

14. Electrode according to one of Claims 1 to 13, **characterized in that** said last layer (4) is constituted by linked elementary solid particles in contact with one another, the mean size of these elementary particles being between 100 nm and 5 $\mu$m.

15. Electrode according to one of Claims 1 to 14, comprising between two and five layers stacked on the solid substrate, the various stacked layers (2, 3, 4) exhibiting a total thickness between 1 $\mu$m and 15 $\mu$m.

16. Electrode according to one of Claims 1 to 15, **characterized in that** said first layer (2) exhibits a porosity less than 10 % by volume.

17. Electrode according to one of Claims 1 to 16, **characterized in that** said last layer (4) exhibits a porosity greater than 10 % and less than 50 % by volume.

18. Electrode according to one of Claims 1 to 17, exhibiting a plurality of layers (3, 4) superposed on said first layer (2) in contact with the solid substrate (1), the porosity of said electrode increasing from said first layer (2) to said last layer (4).

19. Electrode according to one of Claims 1 to 18, **characterized in that** each of said layers (2, 3, 4) results from at least one deposition chosen from a deposition of slip, a deposition of charged sol, and a sol-gel deposition.

20. Electrode according to Claims 18 and 19, **characterized in that** at least one intermediate layer (3) between said first layer (2) and said last layer (4) results from at least one deposition chosen from a deposition of slip and a deposition of charged sol.

21. Electrode according to one of Claims 19 or 20, **characterized in that** said first layer (2) results from at least one sol-gel deposition.

22. Electrode according to one of Claims 19 to 21, **characterized in that** said last layer (4) results from at least one deposition chosen from a deposition of slip and a deposition of charged sol.

23. Electrode according to one of Claims 1 to 22, **characterized in that** amongst the various layers (2, 3, 4) said first layer (2) exhibits the greatest ionic conductivity.

24. Electrode according to one of Claims 1 to 23, **characterized in that** said first layer (2) is constituted by a material, the ionic conductivity of which is greater than or equal to $10^{-2}$ S.cm$^{-1}$.

25. Electrode according to one of Claims 1 to 24, **characterized in that** said last layer (4) is constituted by a material, the ionic conductivity of which is greater than $10^{-4}$ S.cm$^{-1}$, and the electron conductivity of which is greater than 50 S.cm$^{-1}$.

26. Method for manufacturing a gas electrode in which a plurality of layers are stacked on top of one another on the basis of a solid substrate (1) such as a solid electrolyte, the various layers (2, 3, 4) being produced in order to enable the passage of reactive species across the thickness of this electrode and comprising a first layer (2) in contact with said solid substrate (1) and a last layer (4) exhibiting a free outer surface intended to be placed in contact with a gas, each of said layers (2, 3, 4) being constituted by at least one mixed oxide, **characterized in that**:

   - each of said layers (2, 3, 4) is produced in such a way that it is constituted by at least one mixed oxide chosen from the group constituted by the perovskites and by the Ruddlesden-Popper phases corresponding to the following general formula (I):

$$L_{n+1-x}\mathrm{Ni}_{n-y}M_y\mathrm{O}_{3n+1\pm\delta}$$

   where L is an element chosen from the group of the rare earths, Ni represents nickel, M is a transition metal, n is a non-zero integer, $x$, $y$ and $\delta$ are real numbers satisfying the following relations:

$$0 \leq x < n+1$$

$$0 \leq y < n$$

$$0 \leq \delta \leq 0.25,$$

   - said first layer (2) is produced in such a way as to be constituted by at least one mixed oxide chosen from the group of the Ruddlesden-Popper phases corresponding to the formula (I),
   - said first layer (2) is produced in accordance with a deposition process different from the process of deposition with which said last layer (4) is produced, so that:

      • the microstructure of said first layer (2) is different from the microstructure of said last layer (4),
      • the porosity of the various layers (2, 3, 4) increases from said first layer (2), the porosity of which is the lowest, to said last layer (4), the porosity of which is the most substantial,

   - the various stacked layers (2, 3, 4) are produced in such a way that they form a network of interconnected solid matter between the free outer surface of the last layer (4) and the solid substrate (1), exhibiting a total thickness greater than 1 μm.

27. Method according to Claim 26, **characterized in that** said first layer (2) is produced in accordance with a deposition process different from the process of deposition of the superposed layer (3, 4) in contact with this first layer.

28. Method according to one of Claims 26 or 27, **characterized in that** said first layer (2) is deposited on the solid substrate by at least one sol-gel deposition in which precursor species intended to form at least one mixed oxide are mixed in a solvent, then the suspension is admixed to an organic polymeric matrix, then this mixture is applied onto the solid substrate, then the whole is subjected to a thermal treatment that is suitable to bring about the crystallisation of each mixed oxide and the decomposition of the organic polymeric matrix.

**29.** Method according to one of Claims 26 to 28, **characterized in that** said last layer (4) is applied by carrying out at least one deposition of slip in which a slip is produced containing solid particles of at least one mixed oxide which are dispersed in a liquid medium, then this slip is applied in the form of at least one layer, then the whole is subjected to a treatment that is suitable to bring about the evacuation of the liquid medium.

**30.** Method according to one of Claims 26 to 29, **characterized in that** said last layer (4) is applied by carrying out at least one deposition of charged sol in which a suspension is produced containing solid particles dispersed in a liquid solution of precursors of species intended to form at least one mixed oxide, then this suspension is applied in the form of at least one layer, then the whole is subjected to a treatment that is suitable to bring about the deposition and the crystallisation of the mixed oxides and the evacuation of the liquid phase.

**31.** Method according to one of Claims 26 to 30, **characterized in that** between two and five layers (2, 3, 4) are deposited onto the solid substrate (1), the various stacked layers (2, 3, 4) exhibiting a total thickness between 1 $\mu$m and 15 $\mu$m.

**32.** Method according to one of Claims 26 to 31, **characterized in that** the solid substrate (1) is a gastight solid electrolyte chosen from the group constituted by ceramics that are conductors of $O^{2-}$ anions and by ceramics that are conductors of protons.

**33.** Electrochemical cell comprising at least one gas electrode, comprising at least one gas electrode according to one of Claims 1 to 25.

**34.** Electrochemical cell of a fuel cell, **characterized in that** it comprises a solid electrolyte bearing a cathode formed by an air electrode according to one of Claims 1 to 25.

**35.** Electrochemical cell according to one of Claims 33 or 34, **characterized in that** the gas electrode exhibits a plane shape overall.

**36.** Electrochemical cell according to one of Claims 33 or 34, **characterized in that** it exhibits a cylindrical shape overall, notably cylindrical in revolution.

**Patentansprüche**

**1.** Gaselektrode mit einer Vielzahl von Schichten (2, 3, 4), die aufeinander ab einem festen Substrat (1), wie z. B. einem festen Elektrolyt, übereinander gestapelt sind, wobei die unterschiedlichen Schichten (2, 3, 4) geeignet sind, um den Durchgang von Reagensarten über die Dicke dieser Elektrode zu erlauben, und mit einer ersten Schicht (2), die mit dem genannten festen Substrat (1) in Kontakt ist, und einer letzten Schicht (4), die eine freie externe Oberfläche aufweist, die dazu bestimmt ist, mit einem Gas in Kontakt zu stehen, wobei jede der genannten Schichten aus wenigstens einem gemischten Oxid gebildet wird,
**dadurch gekennzeichnet, dass**:

- jede der genannten Schichten (2, 3, 4) aus wenigstens einem gemischten Oxid ausgewählt ist, das aus der Gruppe ausgewählt ist, die aus Perowskiten gebildet wird, und aus Ruddlesden-Popperphasen, die der nachstehenden allgemeinen Formel (I) entsprechen:

$$L_{n+1-x}\mathrm{Ni}_{n-y}M_yO_{3n+1\pm\delta}$$

in der L ein Element ist, das aus der Gruppe der seltenen Erden ausgewählt ist, Ni für Nickel steht, M ein Übergangsmetall ist, n eine ganze Zahl ungleich Null ist, x, y und $\delta$ reelle Zahlen sind, die den folgenden Verhältnissen unterstehen:

$$0 \leq x < n+1$$

$$0 \leq y < n$$

$$0 \leq \delta \leq 0{,}25$$

wobei die genannte erste Schicht (2) aus wenigstens einem gemischten Oxid gebildet wird, das aus der Gruppe der Ruddlesden-Popperphasen ausgewählt ist, die der Formel (I) genügen,

die Mikrostruktur der genannten ersten Schicht (2) unterschiedlich von der Mikrostruktur der genannten letzten Schicht (4) ist,

die Porosität der unterschiedlichen Schichten (2, 3, 4) ab der genannten ersten Schicht (2) ansteigt, deren Porosität die geringste ist, bis zur genannten letzten Schicht (4), deren Porosität die höchste ist,

die unterschiedlichen, übereinander gestapelten Schichten (2, 3, 4) ein Netz aus festem, miteinander verbundenem Material zwischen der freien externen Oberfläche der letzten Schicht (4) und dem festen Substrat (1) bilden, und eine gesamte Dicke von mehr als 1 $\mu$m aufweisen.

2. Elektrode gemäß Anspruch 1, **dadurch gekennzeichnet, dass** die Mikrostruktur der genannten ersten Schicht (2) unterschiedlich von der Mikrostruktur der überlagerten Schicht (3, 4) ist, die mit dieser ersten Schicht (2) in Kontakt ist.

3. Elektrode gemäß Anspruch 1 oder 2, **dadurch gekennzeichnet, dass** der Unterschied der Mikrostrukturen aus unterschiedlichen Proportionen für die das Material bildenden unterschiedlichen Elemente stammt.

4. Elektrode gemäß Anspruch 1 bis 3, **dadurch gekennzeichnet, dass** die genannte letzte Schicht (4) aus wenigstens einem gemischten Oxid gebildet wird, das aus der Gruppe ausgewählt ist, die aus Perowskiten und Ruddlesden-Popperphasen gebildet wird, die der Formel (I) genügt, und alle anderen Schichten (2, 3) aus wenigstens einem gemischtem Oxid gebildet werden, das aus der Gruppe ausgewählt ist, die aus Ruddlesden-Popperphasen gebildet wird, die der allgemeinen Formel (I) unterstehen.

5. Elektrode gemäß Anspruch 1 bis 4, **dadurch gekennzeichnet, dass** jede der Schichten (2, 3, 4) aus wenigstens einem gemischten Oxid gebildet ist, das aus der Gruppe ausgewählt ist, die aus Ruddlesden-Popperphasen gebildet wird, die der allgemeinen Formel (I) unterstehen, und dass die Elemente L und M für alle die genannten Schichten (2, 3, 4) der Elektrode dieselben sind.

6. Elektrode gemäß Anspruch 1 bis 5, **dadurch gekennzeichnet, dass** L ein Element ist, das aus der Gruppe ausgewählt ist, das aus La, Pr, Nd, Sm, Eu, Er und Gd gebildet wird und M ein Übergangsmetall ist, das aus der Gruppe ausgewählt ist, die aus Fe, Co und Mn gebildet wird.

7. Elektrode gemäß Anspruch 1 bis 6, **dadurch gekennzeichnet, dass** für die genannte erste Schicht (2) n-x $\neq$ 1 ist .

8. Elektrode gemäß Anspruch 1 bis 7, **dadurch gekennzeichnet, dass** für die genannte erste Schicht (2) a (n+1-x) / (n-y) < 2 gilt.

9. Elektrode gemäß Anspruch 1 bis 8, **dadurch gekennzeichnet, dass** die genannte erste Schicht (2) aus einem gemischten Oxid mit der Formel $L_{2-x} NiO_{4+\delta}$ gebildet wird, wobei L aus der Gruppe ausgewählt ist, die aus La, Pr, Nd gebildet wird.

10. Elektrode gemäß Anspruch 1 bis 9, **dadurch gekennzeichnet, dass** die genannte letzte Schicht (4) aus einem gemischten Oxid gebildet wird, das aus der Gruppe ausgewählt ist, die aus $LNiO_3$, $L_{2-x} NiO_{4+\delta}$, $L_3 Ni_2O_{7-\delta}$, und Ly $Ni_3O_{10}$ gebildet wird, wobei L aus der Gruppe ausgewählt ist, die aus La, Pr, Nd gebildet wird.

11. Elektrode gemäß Anspruch 1 bis 10, **dadurch gekennzeichnet, dass** die genannte erste Schicht (2) aus festen, elementaren, verbundenen Partikeln gebildet wird, die untereinander in Kontakt sind, wobei die durchschnittliche Größe dieser elementaren Partikel geringer ist als 300 nm.

12. Elektrode gemäß Anspruch 1 bis 11, **dadurch gekennzeichnet, dass** die Dicke der genannten ersten Schicht (2) geringer ist als 200 m, - insbesondere in der Größenordnung von 50 nm.

**13.** Elektrode gemäß Anspruch 1 bis 12, **dadurch gekennzeichnet, dass** die genannte letzte Schicht (4) aus festen elementaren Partikeln gebildet wird, die untereinander offene Poren bilden und ein untereinander vernetztes Netz aus festem Material über seine gesamte Dicke bilden.

**14.** Elektrode gemäß Anspruch 1 bis 13, **dadurch gekennzeichnet, dass** die genannte letzte Schicht (4) aus festen, elementaren, verbundenen Partikeln gebildet wird, die untereinander in Kontakt sind, wobei die durchschnittliche Größe dieser elementaren Partikel zwischen 100 nm und 5 $\mu$m inbegriffen ist.

**15.** Elektrode gemäß Anspruch 1 bis 14, **dadurch gekennzeichnet, dass** sie zwischen zwei und fünf auf dem festen Substrat gestapelte Schichten umfasst, wobei die unterschiedlichen gestapelten Schichten (2, 3, 4) eine zwischen 1 $\mu$m und 15 $\mu$m inbegriffene Dicke aufweisen.

**16.** Elektrode gemäß Anspruch 1 bis 15, **dadurch gekennzeichnet, dass** die genannte erste Schicht (2) eine Porosität aufweist, die im Volumen geringer ist als 10 %.

**17.** Elektrode gemäß Anspruch 1 bis 16, **dadurch gekennzeichnet, dass** die genannte letzte Schicht (4) eine Porosität aufweist, die im Volumen höher ist als 10 % und geringer als 50 %.

**18.** Elektrode gemäß Anspruch 1 bis 17, **dadurch gekennzeichnet, dass** sie eine Vielzahl von Schichten (3, 4) aufweist, die der genannten ersten Schicht (2), die mit dem festen Substrat (1) in Kontakt ist, überlagert sind, und deren Porosität ab der genannten ersten Schicht (2) bis zur genannten letzten Schicht (4) ansteigt.

**19.** Elektrode gemäß Anspruch 1 bis 18, **dadurch gekennzeichnet, dass** aus jeder der genannten Schichten (2, 3, 4) wenigstens eine Ablagerung resultiert, die aus einer Schlempeablagerung, einer Ablagerung aus belastetem Boden und einer Ablagerung Boden-Gel ausgewählt ist.

**20.** Elektrode gemäß Anspruch 18 und 19, **dadurch gekennzeichnet, dass** wenigstens eine Zwischenschicht (3) zwischen der genannten ersten Schicht (2) und der genannten letzten Schicht (4) aus wenigstens einer Ablagerung resultiert, die aus einer Schlempeablagerung und einer Ablagerung aus belastetem Boden ausgewählt ist.

**21.** Elektrode gemäß Anspruch 19 oder 20, **dadurch gekennzeichnet, dass** die genannte erste Schicht (2) aus wenigstens einer Ablagerung Boden-Gel resultiert.

**22.** Elektrode gemäß Anspruch 19 bis 21, **dadurch gekennzeichnet, dass** die genannte letzte Schicht (4) aus wenigstens einer Schicht resultiert, die aus einer Schlempeablagerung und einer Ablagerung aus belastetem Boden ausgewählt ist.

**23.** Elektrode gemäß Anspruch 1 bis 22, **dadurch gekennzeichnet, dass** die genannte erste Schicht (2) unter den unterschiedlichen Schichten (2, 3, 4) die größte ionische Leitfähigkeit aufweist.

**24.** Elektrode gemäß Anspruch 1 bis 23, **dadurch gekennzeichnet, dass** die genannte erste Schicht (2) aus einem Material gebildet wird, dessen ionische Leitfähigkeit höher als oder gleich $10^{-2}$ S.cm$^{-1}$ ist.

**25.** Elektrode gemäß Anspruch 1 bis 24, **dadurch gekennzeichnet, dass** die genannte letzte Schicht (4) aus einem Material gebildet wird, dessen ionische Leitfähigkeit größer als $10^{-4}$ S.cm$^{-1}$ ist und dessen elektronische Leitfähigkeit größer als 50 S.cm$^{-1}$ ist.

**26.** Herstellungsverfahren einer Gaselektrode, bei dem ausgehend von einem festen Substrat (1), wie z. B. einem festen Elektrolyt, eine Vielzahl von Schichten übereinander gestapelt werden, wobei die unterschiedlichen Schichten (2, 3, 4) realisiert werden, um den Durchgang von Reagensarten durch die Dicke dieser Elektrode zu erlauben, und eine erste Schicht (2) umfassen, die mit dem genannten festen Substrat (1) in Kontakt ist, und eine letzte Schicht (4), die eine externe freie Oberfläche aufweist, die dazu bestimmt ist, mit einem Gas in Kontakt gebracht zu werden, wobei jede der genannten Schichten (2, 3, 4) aus wenigstens einem gemischten Oxid gebildet wird, **dadurch gekennzeichnet, dass**:

- jede der genannten Schichten (2, 3, 4) derart realisiert wird, dass sie aus wenigstens einem gemischten Oxid gebildet wird, das aus der Gruppe ausgewählt ist, die aus Perowskiten gebildet wird, und aus Ruddlesden-Popperphasen, die der folgenden allgemeinen Formel (I) genügen:

$$L_{n+1-x}\ Ni_{n-y}\ M_y\ O_{3n+1+/-\delta}$$

in der L ein Element ist, das aus der Gruppe der seltenen Erden ausgewählt ist, Ni für Nickel steht, M ein Übergangsmetall ist, n eine ganze Zahl ungleich Null ist, x, y und δ reelle Zahlen sind, die den folgenden Verhältnissen unterstehen:

$$0 \le x < n+1$$

$$0 \le y < n$$

$$0 \le \delta \le 0,25$$

wobei die genannte erste Schicht (2) derart realisiert wird, dass wenigstens ein gemischtes Oxid gebildet wird, das aus der Gruppe der Ruddlesden-Popperphasen ausgewählt ist, die der Formel (I) genügen,
die genannte erste Schicht (2) gemäß einem von dem Ablagerungsverfahren, mit dem die genannte letzte Schicht (4) realisiert wird, unterschiedlichen Ablagerungsverfahren realisiert wird, so dass:
die Mikrostruktur der genannten ersten Schicht (2) unterschiedlich von der Mikrostruktur von der genannten letzten Schicht (4) ist,
die Porosität der unterschiedlichen Schichten (2, 3, 4) ab der genannten ersten Schicht (2), deren Porosität am geringsten ist, bis zu der genannten letzten Schicht (4), deren Porosität am größten ist, steigt,
die gestapelten unterschiedlichen Schichten (2, 3, 4) derart realisiert werden, dass sie ein Netz aus miteinander verbundenem festem Material zwischen der externen freien Oberfläche (4) und dem festen Substrat (1) bilden und eine gesamte Dicke von mehr als 1 μm aufweisen.

27. Verfahren gemäß Anspruch 26, **dadurch gekennzeichnet, dass** die genannte erste Schicht (2) gemäß einem Ablagerungsverfahren realisiert wird, das von dem Ablagerungsverfahren der übereinander gelagerten Schicht (3, 4), die mit dieser ersten Schicht in Kontakt ist, unterschiedlich ist.

28. Verfahren gemäß Anspruch 26 oder 27, **dadurch gekennzeichnet, dass** die genannte erste Schicht (2) auf dem festen Substrat durch wenigstens eine Ablagerung Boden-Gel aufgebracht wird, in der in einem Lösungsmittel die Vorläuferarten vermischt werden, die dazu bestimmt sind, wenigstens ein gemischtes Oxid zu bilden, dann die Suspension mit einer organischen Polymermatrix vermischt wird, dann diese Mischung auf das feste Substrat angewendet wird, dann die Struktur einer Wärmebehandlung unterzogen wird, die geeignet ist, die Kristallisation jedes gemischten Oxids sowie die Zersetzung der organischen Polymermatrix nach sich zu ziehen.

29. Verfahren gemäß Anspruch 26 bis 28, **dadurch gekennzeichnet, dass** die genannte letzte Schicht (4) durch Realisieren wenigstens einer Schlempeablagerung angewendet wird, in der eine Schlempe realisiert wird, die feste Partikel aus wenigstens einem gemischten Oxid enthält, die in einem flüssigen Milieu dispergiert sind, dann diese Schlempe in Form von wenigstens einer Schicht angewendet wird, dann die Struktur einer Behandlung unterzogen wird, die geeignet ist, den Austrag des flüssigen Milieus nach sich zu ziehen.

30. Verfahren gemäß Anspruch 26 bis 29, **dadurch gekennzeichnet, dass** die genannte letzte Schicht (4) unter Realisierung von wenigstens einer Ablagerung aus belastetem Boden angewendet wird, in der eine Suspension realisiert wird, die feste Partikel enthält, die in einer flüssigen Lösung aus Artenvorläufern dispergiert sind, die dazu bestimmt sind, wenigstens ein gemischtes Oxid zu bilden, dann diese Suspension in Form von wenigstens einer Schicht angewendet wird, dann die Struktur einer Behandlung unterzogen wird, die geeignet ist, die Ablagerung und die Kristallisierung der gemischten Oxide und den Austrag der flüssigen Phase nach sich zu ziehen.

31. Verfahren gemäß Anspruch 26 bis 30, **dadurch gekennzeichnet, dass** auf dem festen Substrat (1) zwischen zwei und fünf Schichten (2, 3, 4) aufgebracht werden, wobei die unterschiedlichen gestapelten Schichten (2, 3, 4) eine

zwischen 1 μm und 15 μm inbegriffene gesamte Dicke aufweisen.

**32.** Verfahren gemäß Anspruch 26 bis 31, **dadurch gekennzeichnet, dass** das feste Substrat (1) ein gegen Gas dichtes, festes Elektrolyt ist, das aus der Gruppe ausgewählt ist, die aus leitfähigen Keramiken der Anionen $O^{2-}$ und der leitfähigen Keramiken der Protonen gebildet wird.

**33.** Elektrochemische Zelle, die wenigstens eine Gaselektrode umfasst, **dadurch gekennzeichnet, dass** sie wenigstens eine Gaselektrode gemäß Anspruch 1 bis 25 umfasst.

**34.** Elektrochemische Batteriezelle mit Brennstoff, **dadurch gekennzeichnet, dass** sie ein festes Elektrolyt umfasst, das eine Kathode trägt, die aus einer Luftelektrode gemäß Anspruch 1 bis 25 gebildet wird.

**35.** Elektrochemische Zelle gemäß Anspruch 33 oder 34, **dadurch gekennzeichnet, dass** die Gaselektrode eine insgesamt ebene Form aufweist.

**36.** Elektrochemische Zelle gemäß Anspruch 33 oder 34, **dadurch gekennzeichnet, dass** diese eine insgesamt zylindrische - insbesondere revolutionszylindrische - Form aufweist.

Fig 1

Fig 2

Fig 3

Fig 4

Fig 5b

Fig 5d

Fig 5a

Fig 5c

## RÉFÉRENCES CITÉES DANS LA DESCRIPTION

**Documents brevets cités dans la description**

- WO 9933134 A
- EP 0510820 A
- FR 2697947
- JP 2006012764 B
- JP 2005183279 B
- WO 2005099003 A
- US 3330697 A, Péchini

**Littérature non-brevet citée dans la description**

- **M. Greenblatt.** Ruddlesden-Popper nickelates Lnn+1NinO3n+1 : structure and properties. *Opinion in Solid State & Matérials Science,* 1997, vol. 2, 174-183
- **F. Mauvy et al.** Oxygen reduction on porous Ln2NiO4+δ electrodes. *Journal of the European Ceramic Society,* 2005, vol. 25, 2669-2672
- **M. Greenblatt.** Ruddlesden-Popper nickelates Lnn+1NinO3n+1: structure and properties. *Current opinion in Solid State & Matérials Science,* 1997, vol. 2, 174-183